# DEMANDE DE BREVET EUROPEEN

(11) **EP 2 549 163 A1**
(43) Date de publication de la demande: **23.01.2013**
(21) Numéro de dépôt: 12177208.1
(22) Date de dépôt: 20.07.2012
(51) Int. Cl.: F16L 3/223, F16L 3/13

(54) **Colonnette de maintien en position d'un tube par rapport à une paroi**

(30) Priorité: 22.07.2011 FR 1102287
(71) Demandeur: Thales, 92200 Neuilly Sur Seine (FR); Centre National d'Etudes Spatiales, 75039 Paris Cedex 01 (FR)
(72) Inventeur: Masse, Christian, 06110 Le Cannet (FR); Montredon, Florence, 06550 La Roquette sur Siagne (FR); Mismaque, Hugues, 83480 Puget/Argens (FR); Morbelli, Eric, 83600 Les Adrets de L'Esterel (FR)
(74) Mandataire: Collet, Alain

(57) **Abrégé**

L'invention concerne le maintien en position d'un tube par rapport à une paroi. Selon l'invention, la colonnette (10) s'étend selon une direction principale (13) et comprend :
● une première face (12) perpendiculaire à la direction principale (13) et destinée à venir en appui contre la paroi,
● des moyens de fixation permettant d'immobiliser la première face (12) contre la paroi,
● au moins une seconde face (14, 15, 16, 17) parallèle à la direction principale (13), sur laquelle un tube (18, 19) peut être positionné,
● un moyen de maintien temporaire et un moyen de maintien définitif distinct du moyen de maintien temporaire, les moyens de maintien permettant tous deux d'immobiliser le tube (18, 19) en appui contre la seconde face (14, 15, 16, 17).

## Description

L'invention concerne le maintien en position d'un tube par rapport à une paroi. L'invention trouve une utilité particulière dans l'industrie spatiale et principalement pour faire cheminer des tubes le long de parois de satellites. Ces tubes peuvent par exemple véhiculer du fluide assurant la propulsion des satellites.

Dans l'assemblage des satellites de nombreuses contraintes sont à prendre en compte comme par exemple le découplage thermique entre les différents constituants du satellite afin que les parois extérieures du satellite ne transmettent pas par conduction un flux thermique vers des constituants internes. Un découplage mécanique est aussi à prévoir pour éviter que des vibrations ne se propagent entre les différents constituants. Ces vibrations sont notamment importantes lors du décollage.

Ces contraintes sont à ce jour respectées au moyen de pièces mécaniques spécifiquement dédiées aux fonctions de découplage. Par exemple, pour le montage de tubes fixés le long d'une paroi, on utilise classiquement des colonnettes métalliques maintenant les tubes à la paroi. Pour assurer le découplage thermique, on interpose dans l'assemblage des éléments en matériau plastique comme par exemple des rondelles. Ces rondelles assurent une bonne rupture de pont thermique. Elles présentent néanmoins plusieurs inconvénients, comme par exemple le fait de fluer sous charge. Plus précisément, on est tenu de resserrer périodiquement les assemblages comprenant ces rondelles, ce qui est impossible une fois le lancement du satellite effectué. De plus, ces rondelles constituent un composant supplémentaire augmentant le temps de montage, et donc son coût.

Pour assurer le découplage mécanique, on peut utiliser un manchon en élastomère entourant le tube, le manchon pouvant être disposé à l'intérieur d'un collier fixé à la colonnette. Le collier et le manchon constituent, comme les rondelles, un composant supplémentaire grevant le coût de l'assemblage.

Par ailleurs, les opérations de routage des tubes lors de l'assemblage des satellites sont délicates et se font souvent par itération. Plus précisément, au cours du montage, on peut être amené à modifier le cheminement des tubes avant de réaliser le routage définitif. La fixation définitive des tubes réclame de résister à des contraintes d'environnement sévères telles que des vibrations présentes lors de la phase de mise en orbite à bord d'un engin lanceur. Le moyen de fixation du tube réclame donc une grande robustesse ce qui est souvent incompatible avec le souhait d'un démontage rapide pour la phase itérative aboutissant au choix du meilleur cheminement possible des tubes le long de la paroi.

L'invention vise à pallier tout ou partie des problèmes cités plus haut en réduisant le nombre de pièces mécaniques dédiées à l'assemblage d'un tube le long d'une paroi.

A cet effet, l'invention a pour objet une colonnette destinée à maintenir en position au moins un tube par rapport à une paroi, **caractérisée en ce que** la colonnette s'étend selon une direction principale et en ce qu'elle comprend :
- une première face perpendiculaire à la direction principale et destinée à venir en appui contre la paroi,
- des moyens de fixation permettant d'immobiliser la première face contre la paroi,
- au moins une seconde face parallèle à la direction principale, sur laquelle un tube peut être positionné,
- un moyen de maintien temporaire et un moyen de maintien définitif distinct du moyen de maintien temporaire, les moyens de maintien permettant tous deux d'immobiliser le tube en appui contre la seconde face.

L'invention sera mieux comprise et d'autres avantages apparaîtront à la lecture de la description détaillée d'un mode de réalisation donné à titre d'exemple, description illustrée par le dessin joint dans lequel :
la figure 1 représente en perspective une colonnette conforme à l'invention, la colonnette supportant deux tubes ;
les figures 2a et 2b représentent la colonnette en vue de face pour la figure 2a et en vue de dessus pour la figure 2b ;
la figure 3 représente une variante de colonnette permettant un maintien temporaire du tube ;
la figure 4 représente une vue agrandie de la colonnette de la figure 3 ;
les figures 5, 6 et 7 représentent une colonnette prévue pour ne supporter qu'un seul tube ;
les figures 8 et 9 représentent une variante de la colonnette des figures 5, 6 et 7.

Par souci de clarté, les mêmes éléments porteront les mêmes repères dans les différentes figures.

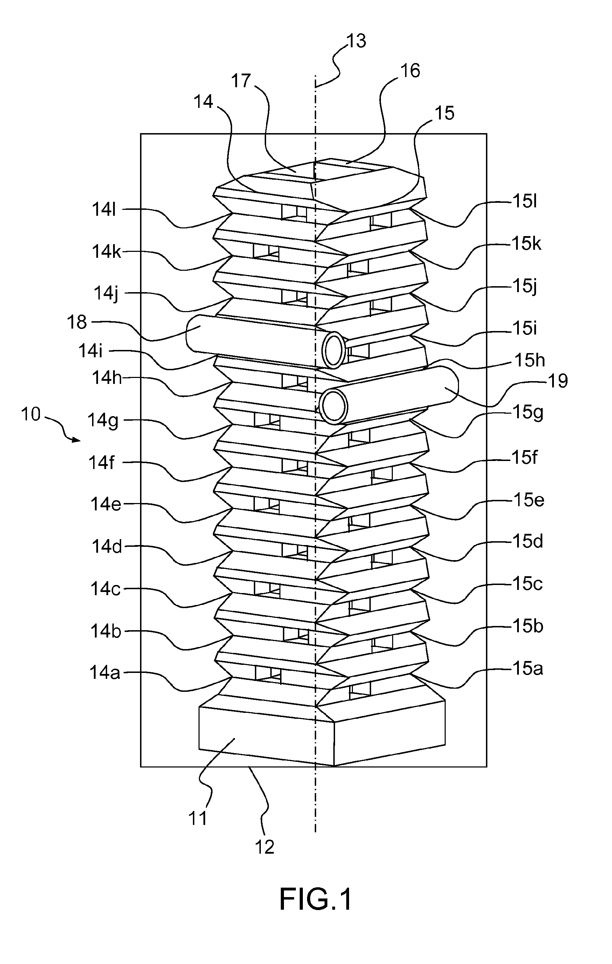

La figure 1 représente une colonnette 10 destinée à être fixée sur une paroi. A cet effet, la colonnette 10 comprend une embase 11 présentant une face plane 12 destinée à prendre appui sur la paroi. La fixation de la colonnette 10 sur la paroi peut se faire par exemple par vis ou par tout autre moyen de fixation démontable comme par exemple un clip ou non démontable comme par exemple le collage de la colonnette 10 sur la paroi.

La paroi est localement plane au niveau où la colonnette 10 doit y être fixée. Les termes « localement plane » doivent être interprétés au sens large. On peut mettre en oeuvre une colonnette 10 sur une paroi gauche présentant un emplacement sur lequel peut s'appuyer la colonnette 10 par sa face 12.

La colonnette 10 s'étend selon une direction principale 13 sensiblement perpendiculaire à la face 12. La colonnette 10 comprend une ou plusieurs faces parallèles à la direction principale. Un tube peu prendre appui sur chacune des faces parallèles à la direction principale pour y être positionné. Dans l'exemple représenté, la colonnette 10 est à section sensiblement carrée perpendiculairement à la direction principale 13 et comprend donc quatre faces 14, 15, 16 et 17 parallèles à la direction principale 13. D'autres configurations sont bien entendue possibles, comme par exemple une colonnette 10 à section hexagonale et comprenant donc six faces parallèles à la direction principale 13. Dans l'exemple représenté, un tube 18 est positionné en appui contre la face 14 et un tube 19 contre la face 15. Avantageusement, la colonnette 10 comprend des moyens pour positionner un tube parallèlement à la face 12. Autrement dit, au niveau de la colonnette 10, le tube est parallèle à la paroi.

Pour assurer le positionnement, d'un tube, la colonnette 10 comprend par exemple au moins une rainure réalisée dans chacune des faces 14, 15, 16 et 17. Un tube peut être plaqué dans chacune des rainures afin d'assurer son positionnement en appui contre la face considérée.

Dans l'exemple représenté, chacune des faces 14, 15, 16 et 17 comprend plusieurs rainures parallèles, les dimensions de chaque rainure étant définies de façon à pouvoir positionner chacune un tube par rapport à la paroi. La face 14 comprend les rainures 14a à 141 et la face 15 comprend les rainures 15a à 151. Il est de même pour les deux faces 16 et 17 cachées dans la représentation de la figure 1. Autrement dit, la colonnette 10 comprend des moyens pour positionner un tube à plusieurs emplacements prédéterminés de chacune des faces 14, 15, 16 et 17. Pour assurer le positionnement de tubes parallèlement à la face 12, les différentes rainures s'étendent parallèlement à la face 12.

Lorsqu'on souhaite ne positionner qu'un seul tube en appui contre une face, les différentes rainures d'une même face permettent de choisir la distance entre le tube et la paroi. Dans l'exemple représenté, on a deux tubes 18 et 19 dont les orientations au voisinage de la colonnette 10 sont perpendiculaires, du fait de l'orientation relative des faces 14 et 15 entre elles. Les différentes rainures permettent d'éviter que les tubes 18 et 19 ne se touchent en les positionnant à des distances différentes de la paroi.

La colonnette 10 comprend aussi des moyens de maintien permettant d'immobiliser le ou les tubes en appui contre la face selon laquelle ils sont positionnés.

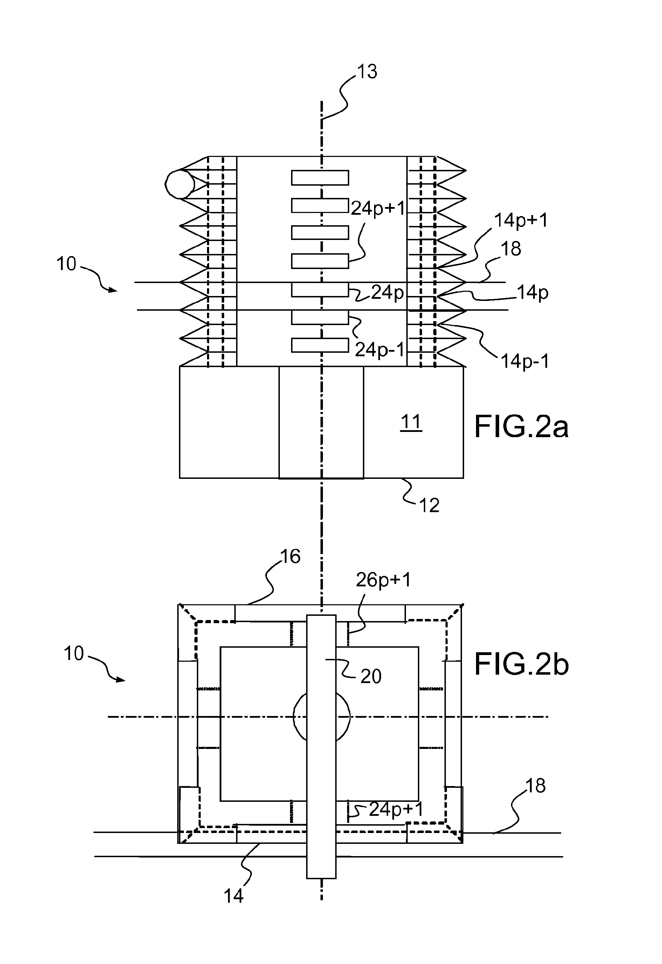

La figure 2a représente la colonnette 10 en vue de face perpendiculairement à la face 12 et la figure 2b en vue de dessus parallèlement à la face 12. L'esquisse du tube 18 est représenté dans une des rainures, notée ici 14p. La partie alphabétique du repère de la rainure, ici « p » représente son rang à partir de l'embase 11. Il est équivalent à l'un des repères de la figure 1.

La colonnette 10 comprend des lumières destinées à recevoir un collier permettant l'immobilisation de tubes en appui contre chacune des faces 14, 15, 16 et 17. Plus précisément, au niveau de chaque rainure, les faces 14, 15, 16 et 17 sont percées de lumières. Pour la face 14, les lumières portent le repère 24 suivi du même indice que celui de la rainure. On trouve par exemple une lumière 24p dans la rainure 14p et une lumière 26p dans la rainure 16p. Pour fixer un tube dans la rainure 14p, on peut glisser un collier de serrage 20 dans la lumière 14p-1, ressortir de la colonnette 10 par la lumière 26p+1 et traverser à nouveau la colonnette 10 par les lumières 26p-1 et 24p-1. Le collier est alors serré autour du tube 18 pour verrouiller sa position dans la rainure 14p. Les lumières 24 associées au collier forment un moyen de maintien définitif du tube 18 en position contre la colonnette 10. Il est bien entendu que dans l'exemple représenté, le moyen de maintien définitif reste démontable. Il suffit de couper le collier pour que le tube 18 retrouve sa liberté par rapport à la colonnette 10. A titre d'alternative, il est également possible de maintenir le tube par exemple au moyen d'un cavalier que l'on vient visser sur la colonnette 10.

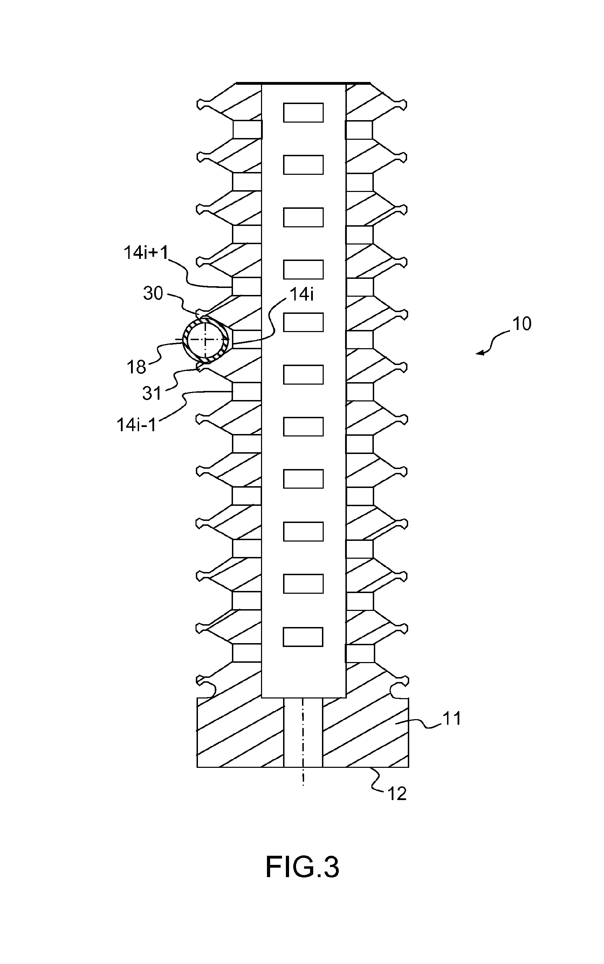

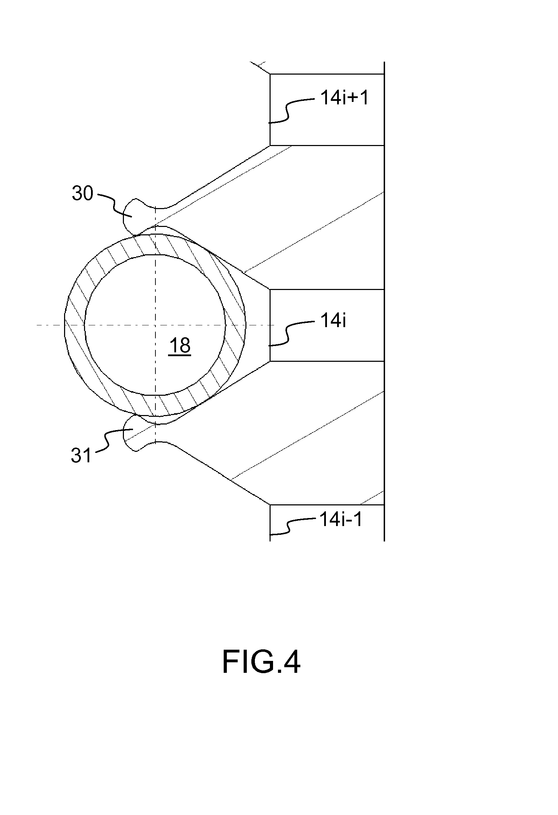

Les figures 3 et 4 permettent de visualiser un second moyen de maintien du tube18 en position contre la colonnette 10. Ce second moyen de maintien est appelé moyen temporaire par opposition au moyen de maintien définitif.

Une caractéristique essentielle de l'invention est de disposer de deux moyens de maintien distincts, On peut distinguer les moyens de maintien définitif et temporaire par la durée nécessaire à leur mise en oeuvre à la mise en place et au démontage. Autrement dit, le moyen temporaire nécessite une durée de mise en oeuvre plus faible que le moyen définitif. Pour le moyen temporaire une simple pression sur le tube permet d'assurer le maintien et une simple traction opposée à la pression permet de libérer le tube.

On peut également distinguer les moyens de maintien définitif et temporaire par l'utilisation de l'équipement dans lequel est montée la colonnette. Le moyen de maintien temporaire est destiné à être mis en oeuvre lors du montage de l'équipement, alors que le moyen de maintien définitif est destiné à être mis en oeuvre lors de l'utilisation de l'équipement.

Dans son utilisation, le moyen de maintien temporaire n'est pas soumis aux mêmes contraintes d'environnement que le maintien définitif. Le maintien temporaire doit permettre l'immobiliser de tube durant la phase de montage du tube. Alors que le moyen définitif doit assurer le maintien du tube durant la phase d'utilisation de l'équipement auquel appartiennent le tube et la paroi le long de laquelle le tube chemine. Lors de cette utilisation l'équipement peut être soumis à des vibrations qui nécessitent un moyen de maintien plus robuste que le moyen temporaire.

Le moyen de maintien temporaire comprend par exemple des moyens pour clipper le tube afin de le maintenir temporairement en position. Le maintien temporaire est utile lorsqu'un opérateur réalise l'assemblage de tubes le long de la paroi. L'opérateur immobilise temporairement le ou les tubes contre différentes colonnettes 10. Le maintien temporaire permet de modifier facilement le cheminement des tubes lors de la phase d'assemblage afin de déterminer le meilleur cheminement possible. Une fois le cheminement validé, l'opérateur fixe définitivement les tubes aux colonnettes aux moyens des colliers 20.

Le clippage des tubes peut être réalisé au moyen d'excroissances situées aux bords des rainures. Ces excroissances forment un point dur lors de la mise en place d'un tube dans la rainure choisie. Par exemple sur la figure 3, des excroissances en forme de boules sont disposées entre chaque rainure. Pour ne pas surcharger la figure, seules deux excroissances ont été référencées. L'excroissance située entre les rainures 14i et 14i+1 porte le repère 30 et l'excroissance située entre les rainures 14i et 14i-1 porte le repère 31. La figure 4 est une vue agrandie de la colonnette 10 au niveau de la rainure 14i. Les excroissances 30 et 31 réduisent la largeur de la rainure 14i en dessous du diamètre du tube 18. Lors de l'insertion du tube 18 dans la rainure 14i, les excroissances 30 et 31 se déforment en s'écartant l'une de l'autre puis se resserrent une fois que le tube a pris sa place au fond de la rainure 14i. La déformation des excroissances 30 et 31 créent un pic d'effort radial par rapport au tube 18 lors de sa mise en place. L'effort maximum radial est obtenu au moment ou le diamètre du tube passe au niveau des excroissances. En poursuivant l'insertion du tube 18, l'effort radial exercé sur le tube 18 se réduit.

Pour retirer le tube 18 de la rainure 14i, il est nécessaire de passer à nouveau le point dur. Plus précisément, l'effort radial exercé par les excroissances 30 et 31 sur le tube lorsque le tube est disposé au fond de la rainure 14i doit augmenter pour extraire le tube 18 de la rainure 14i. Autrement dit un opérateur insérant un tube dans une rainure voit l'effort qu'il doit produire en poussant le tube augmenter puis diminuer. Le maximum d'effort, ou point dur, est obtenu lorsqu'un diamètre du tube passe au niveau des excroissances 30 et 31. A l'inverse, pour extraire le tube de la rainure, l'opérateur doit également passer ce point dur qui permet donc de maintenir le tube au fond de la rainure.

D'autres formes permettant d'assurer un point dur lors de la mise en place ou l'extraction du tube 18 de la rainure 14i sont bien entendues possibles comme par exemple des crochets que le tube doit déformer lors de son insertion dans la rainure 14i.

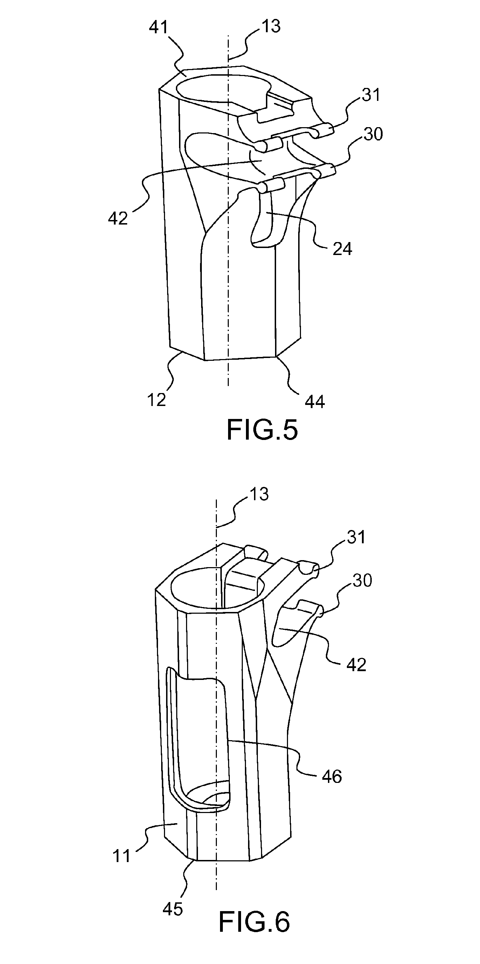

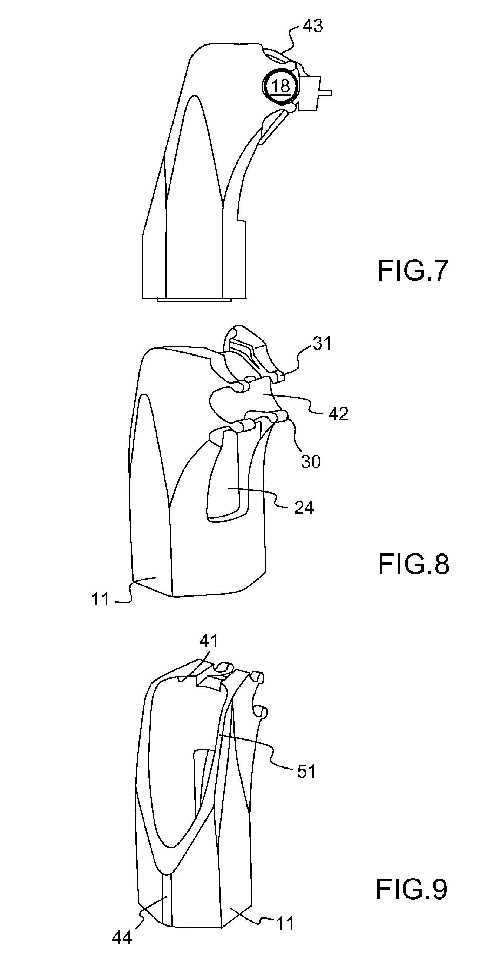

Les figures 5, 6 et 7 représentent une première variante d'une colonnette 40 prévue pour ne supporter qu'un seul tube. De façon plus générale, la colonnette comprend une seule face 44, sur laquelle un tube 18 peut être positionné. Les figures 5 et 6 représentent la colonnette 40 en perspective et la figure 7 en vue de profil. La colonnette 40 est de forme tubulaire le long de sa direction principale 13. La colonnette 40 est creuse depuis son embase 11 jusqu'à son extrémité 41 opposée à sa face 12. La colonnette 40 ne comprend qu'une seule lumière 24 située sous la rainure 42 permettant d'accueillir le tube 18. Un collier 43 est représenté sur la figure 7. Ce collier rentre dans la colonnette 40 par la lumière 24 et en ressort par l'extrémité 41. Une fois fermé le collier 43 entoure le tube 18 pour le maintenir dans le fond de la rainure 42. La lumière 24 associée au collier 43 forme le moyen de maintien définitif du tube18 en position contre la colonnette 40. A titre d'alternative, il est également possible de maintenir le tube par exemple au moyen d'un cavalier que l'on vient visser sur la colonnette 40. Dans cette variante, on retrouve également les excroissances 30 et 31 formant le moyen de maintien temporaire du tube 18 contre la colonnette.

La rainure 42 est disposée sur la face 44 de la colonnette 40. Sur une face 45, opposée à la face 44, la colonnette 40 dispose d'une ouverture 46 permettant d'accéder à l'embase 11 par l'intérieur de la colonnette 40. L'ouverture 46 permet par exemple de positionner une vis destinée à fixer l'embase 11 sur la paroi. Une fois la vis mise en place, on pourra la serrer au moyen d'un tournevis inséré par l'extrémité 41 de la colonnette 40. Dans la variante représentée sur les figures 5 à 7, l'ouverture 46 présente un contour fermé. Autrement dit, la face 45 n'est pas ouverte sur toute sa hauteur. L'ouverture 46 n'atteint pas l'extrémité 41.

Le contour fermé de l'ouverture 41 apporte de la rigidité à la colonnette 40. Néanmoins, lorsque les moyens de maintien définitifs sont mis en oeuvre, le collier de serrage obstrue en partie l'intérieur de la colonnette 40, ce qui gêne l'accès à l'embase 11 par l'ouverture 46. On peut difficilement y faire pénétrer un outil, tel qu'un tournevis, utilisé pour la fixation de la colonnette 40 sur la paroi.

Les figures 8 et 9 représentent une colonnette 50 prévue comme pour la colonnette 40 pour ne supporter qu'un seul tube. On retrouve la rainure 42, les excroissances 30 et 31 ainsi que la lumière 24. A la différence de la colonnette 40, la colonnette 50 possède une ouverture 51 disposée sur la face 45 et présentant un contour ouvert. L'ouverture 51 s'étend depuis l'embase 11 jusqu'à l'extrémité 41. L'ouverture 51 forme une échancrure permettant pour un opérateur d'accéder facilement à la lumière 24 pour faire cheminer le collier 43. Les doigts de l'opérateur ne sont pas gênés par la face 45 au niveau de l'extrémité 41 pour la manipulation du collier 43. Cette ouverture permet également d'accéder plus facilement à l'embase 11 notamment pour la fixation de la colonnette 50 sur la paroi au moyen d'un tournevis.

Avantageusement les colonnettes 10, 40 et 50 sont réalisées dans un matériau polymère comme par exemple un matériau de la famille des polyamides afin d'assurer un découplage thermique entre le tube 18 et la paroi.

## Revendications

1. Colonnette destinée à maintenir en position au moins un tube (18, 19) par rapport à une paroi, **caractérisée en ce que** la colonnette (10, 40, 50) s'étend selon une direction principale (13) et **en ce qu'**elle comprend :
• une première face (12) perpendiculaire à la direction principale (13) et destinée à venir en appui contre la paroi,
• des moyens de fixation permettant d'immobiliser la première face (12) contre la paroi,
• au moins une seconde face (14, 15, 16, 17 ; 44) parallèle à la direction principale (13), sur laquelle un tube (18, 19) peut être positionné,
• un moyen de maintien temporaire et un moyen de maintien définitif distinct du moyen de maintien temporaire, les moyens de maintien permettant tous deux d'immobiliser le tube (18, 19) en appui contre la seconde face (14, 15, 16, 17 ; 44).

2. Colonnette selon la revendication 1, **caractérisée en ce qu'**elle comprend des moyens pour positionner un tube (18, 19) parallèlement à la première face (12).

3. Colonnette selon l'une des revendications précédentes, **caractérisée en ce qu'**elle comprend une rainure (14a à 14l, 15a à 15l ; 42) réalisée dans la face (14, 15, 16, 17 ; 44) et dans laquelle le tube (18, 19) est destiné à se plaquer pour assurer son positionnement.

4. Colonnette selon l'une des revendications précédentes, **caractérisée en ce qu'**elle comprend des moyens pour positionner le tube (18, 19) à plusieurs emplacements prédéterminés de la seconde face (14, 15, 16, 17).

5. Colonnette selon les revendications 4 et 5, **caractérisée en ce qu'**elle comprend plusieurs rainures parallèles (14a à 14l, 15a à 15l), les dimensions de chaque rainure sont définies de façon à positionner le tube (18, 19) par rapport à la paroi.

6. Colonnette selon l'une des revendications précédentes, **caractérisée en ce que** le moyen de maintien temporaire comprend des moyens (30, 31) pour clipper le tube (18, 19).

7. Colonnette selon l'une des revendications précédentes, **caractérisée en ce que** le moyen de maintien définitif comprend des lumières (24p, 26p ; 24) destinées à recevoir un collier (20 ; 43) permettant la fixation du tube (18, 19) en appui contre la seconde face (14, 15, 16, 17 ; 44).

8. Colonnette selon l'une des revendications précédentes, **caractérisée en ce qu'**elle comprend une seule seconde face (44), sur laquelle un tube (18) peut être positionné, **en ce que** la colonnette (40 ; 50) est creuse depuis une embase (11) jusqu'à une extrémité (41) de la colonnette (40, 50), extrémité (51) opposée à la première face (12), et **en ce que** sur une face opposée (45) à la seconde face (44), la colonnette (40 ; 50) dispose d'une ouverture (46 ; 51) permettant d'accéder à l'embase (11).

9. Colonnette selon la revendication 8, **caractérisée en ce que** l'ouverture (51) s'étend depuis l'embase (11) jusqu'à l'extrémité (41).

10. Colonnette selon l'une quelconque des revendications 1 à 7, **caractérisée en ce qu'**elle comprend plusieurs secondes faces (14, 15, 16, 17) parallèles à la direction principale (13) permettant chacune de positionner un tube (18, 19) en appui contre la seconde face (14, 15, 16, 17) considérée.

11. Colonnette selon l'une des revendications précédentes, **caractérisée en ce qu'**elle est réalisée dans un matériau polymère.
